# EUROPEAN PATENT APPLICATION

(11) **EP 0 587 890 A1**
(43) Date of publication of application: **23.03.1994**
(21) Application number: 92911160.7
(22) Date of filing: 05.06.1992
(51) Int. Cl.: G02F 1/1335, G02B 5/30, G02B 1/04

(54) **PHASE PLATE FOR LIQUID CRYSTAL DISPLAY**

(30) Priority: 07.06.1991 JP 163902/91
(71) Applicant: NIPPON ZEON CO., LTD., Chiyoda-ku Tokyo 100 (JP); FUJIMORI KOGYO CO., LTD., Tokyo 103 (JP)
(72) Inventor: TAKAHASHI, Nobukazu, Yokohama-shi, Kanagawa 247 (JP); HANI, Tsutomu, Yokohama-shi, Kanagawa 235 (JP); NATSUUME, Tadao, Yokosuka-shi, Kanagawa 239 (JP); ICHIKAWA, Rinjiro, Otsu-shi, Shiga 520 (JP); HASHIMOTO, Kenji, Tokyo 171 (JP)
(74) Representative: Perry, Robert Edward
(86) International application number: JP9200726
(87) International publication number: WO9222002

(57) **Abstract**

A phase plate for a liquid crystal display, having a birefringent layer made by drawing a thermoplastic saturated norbornene resin sheet prepared by solution casting and has a residual solvent concentration lower than 2 wt %. The birefringent layer is uniform optically all over the surface, and even when the temperature and humidity change, the optical uniformity is maintained.

## Description

### TECHNICAL FIELD

The present invention relates to a phase plate for liquid crystal displays, and more particularly to a phase plate for liquid crystal displays, which has, as a birefringent layer, a stretched and oriented film composed of a thermoplastic saturated norbornene resin, and is optically even.

### BACKGROUND ART

In order to achieve high definition and large area in display, a high-multiplex operation display in which the twist angle of liquid crystal molecules was controlled greater than conventional 90 degrees has been put to practical use. This is generally called a supertwisted nematic mode (STN-type mode), and an SBE mode, an STN mode and the like are known. In this STN-type mode, steep deformation of molecular orientation by application of voltage is combined with the optical effect of birefringence to optimize retardation (a product of the refractive index anisotropy of a liquid crystal and a cell gap = Δn•d) and the azimuthal angle of a polarizer so as to achieve still better display characteristics. In recent years, black-and-white display has come to be achieved in the STN mode by a system in which a phase plate is used to compensate for a phase difference of transmitted light, which has been caused by the birefringence effect, or the like. It is also possible to form full- color images by supplementing color filters, as needed.

Incidentally, a phase plate used in such a liquid crystal display is a plate used in shifting the relative phase of a polarized component of light and made of a birefringent material. In the plate, an oriented film made of a synthetic resin is used as a birefringent layer. Examples of the structure of the phase plate for liquid crystal displays include a single-layer structure composed of one birefringent layer, a multi-layer structure obtained by laminating two or more birefringent layers which are identical or different in birefringent behavior, a structure with a protective layer, and the like (for example, Japanese Patent Application Laid-Open No. 158701/1990).

In order to provide bright colors and high- definition images, a phase plate for liquid crystal displays is required that its birefringent layer is optically even at the whole surface and undergoes no change in optical properties even by changes of temperature and/or humidity. In particular, if the plate is used in a liquid crystal display panel for installation in a car, it is required to withstand a temperature of at least 60 _{°} C or higher, preferably 80 _{°} C or higher, more preferably 100 _{°} C or higher because it is predicted that the panel would be used under severe conditions. In addition, if a solvent remains in a great amount, the use of the phase plate at an elevated temperature has adverse influences such that its retardation value becomes uneven and the surface of a resin other than the birefringent layer is eroded. It is therefore desired that the concentration of the residual solvent in the oriented, synthetic resin film be generally 2 wt.% or lower, preferably 1 wt.% or lower, more preferably 0.5 wt.% or lower.

As synthetic resin materials for such phase plates for liquid crystal displays, there have heretofore been used various kinds of film-forming resins such as phenoxyether type crosslinkable resins, epoxy resins, polycarbonate resins, allylate resins and polycarbonate resins.

However, the phenoxyether type crosslinkable resins, epoxy resins, polycarbonate resins, allylate resins and the like are difficult to stretch evenly, and moreover are insufficient in moisture resistance, and hence have hygroscopicity of the order of 0.1-0.2 wt.%. Therefore, their retardation stability is lowered by changes of humidity in an environment used. Besides, since the polycarbonate resins, allylate resins and the like have high heat resistance, their stretching temperature is high. Therefore, it is hard to control the stretching temperature, and hence to produce an optically even phase plate.

In addition, since these oriented, synthetic resin films generally have a photoelastic coefficient as great as ₅₀-₁₀0 x 10-¹³ cm²/dyne, there is a problem that their retardation values are changed greatly by a slight stress.

As described above, the phase plates composed individually of the oriented films of the conventionally-known synthetic resins are not fully satisfactory for liquid crystal displays. There is hence demand for improving them.

### DISCLOSURE OF THE INVENTION

It is an object of the present invention to provide a phase plate for liquid crystal displays, in which a birefringent layer is optically even at the whole surface, and such optical evenness remains constant even by changes of temperature, humidity and/or the like.

The present inventors have carried out an extensive investigation with a view toward overcoming the above-described problems involved in the prior art. As a result, it has been found that an oriented film obtained by solvent-casting a thermoplastic saturated norbornene resin into a sheet, drying the sheet to give a residual solvent concentration of 2 wt.% or lower and then stretching the sheet has excellent properties for a phase plate for liquid crystal displays, leading to completion of the present invention.

According to the present invention, there is thus provided a phase plate for liquid crystal displays, comprising, as a birefringent layer, a film obtained by stretching and orienting a sheet of a thermoplastic saturated norbornene resin, which has been formed by solvent casting and has a residual solvent concentration of 2 wt.% or lower.

### BEST MODE FOR CARRYING OUT THE INVENTION

Features of the present invention will hereinafter be described in detail.

Thermoplastic saturated norbornene resin:
Examples of the thermoplastic saturated norbornene resin useful in the practice of the present invention may include (1) resins obtained by optionally subjecting a ring-opened (co)polymer of a norbornene monomer to polymer modification such as addition of maleic acid or addition of cyclopentadiene and then hydrogenating the (co)polymer,
(2) resins obtained by subjecting a norbornene monomer to addition polymerization, and (3) resins obtained by subjecting a norbornene monomer and an olefinic monomer such as ethylene or a-olefin to addition copolymerization. The polymerization process and hydrogenation process may be conducted in accordance with methods known per se in the art.

Examples of the norbornene monomer may include norbornene, alkyl- and/or alkylidene-substituted products thereof, for example, 5-methyl-2-norbornene, 5-dimethyl-2-norbornene, 5-ethyl-2-norbornene, 5-butyl-2-norbornene, 5-ethylidene-2-norbornene, etc., and substitution products of these compounds with a polar group such as a halogen; dicyclopentadiene, 2,3-dihydrodicyclopentadiene and the like; dimethanooctahydronaphthalene, alkyl- and/or alkylidene-substituted products thereof, and substitution products of these compounds with a polar group such as a halogen, for example, 6-methyl-1,4:5,8-dimethano-1,4,4a,5,6,7,8,8a-octahydronaphthalene, 6-ethyl-1,4:5,8-dimethano-1,4,4a,5,6,7,8,8a-octahydronaphthalene, 6-ethylidene-1 ,4:5,8-dimethano-1 ,4,4a,5,6,7,8,8a-octahydronaphthalene, 6-chloro-1,4:5,8-dimethano-1,4,4a,5,6,7,8,8a-octahydronaphthalene, 6-cyano-1,4:5,8-dimethano-1,4,4a,5,6, 7,8,8a-octahydronaphthalene, 6-pyridyl-1,4:5,8-dimethano-1,4,4a,5,6,7,8,8a-octahydronaphthalene, 6-methoxycarbonyl-1,4:5,8-dimethano-1,4,4a,5,6,7,8,8a-octahydronaphthalene,etc.; trimers and tetramers of cyclopentadiene, for example, 4,9:5,8-dimethano-3a,4,4a,5,8,8a,9,9a-octahydro-1 H-benzoindene, 4,11:5,10:6,9-trimethano-3a,4,4a,5,5a,6,9,9a,

10,1 Oa,11,11 a-dodecahydro-1 H-cyclopentaanthracene; and the like.

In the present invention, other ring-polymerizable cycloolefins may be used in combination within limits not impeding the object of this invention. Specific examples of such cycloolefins include compounds having a reactive double bond, such as cyclopentene, cyclooctene and 5,6-dihydrocyclopentadiene.

The thermoplastic saturated norbornene resin used in the present invention has a number average molecular weight in a range of generally 25,000-100,000, preferably 30,000-80,000, more preferably 40,000-70,000 as determined by gel permeation chromatography (GPC) making use of toluene as a solvent. If the number average molecular weight is too low, a resin deteriorated in mechanical strength is provided. If the number average molecular weight is too high, the resulting resin becomes deteriorated in solubility, moldability or formability, and easiness of operation upon casting.

If the thermoplastic saturated norbornene resin is obtained by hydrogenating a ring-opened polymer of a norbornene monomer, its hydrogenation rate is generally controlled to at least 90%, preferably at least 95%, more preferably at least 99% from the viewpoint of resistance to deterioration by heat, resistance to deterioration by light, and the like.

The thermoplastic saturated norbornene resin is excellent in transparency, heat resistance, moisture resistance, chemical resistance and the like. In particular, a resin having hygroscopicity of generally at most 0.05%, preferably at most 0.01 % can be provided with ease. Further, its photoelastic coefficient is as small as 3-9 x 10-¹³ cm²/dyne. Such a resin is hence a material suitable for use in producing an optically even oriented film.

The thermoplastic saturated norbornene resin used in the present invention may be added with various additives such as an age resistor such as phenolic or phosphoric, an antistatic agent and an ultraviolet stabilizer if desired. A leveling agent is preferably added to reduce the surface roughness of a film to be formed. As such a leveling agent, may be used leveling agents for paints such as, for example, fluorocarbon type nonionic surfactants, special acrylic resin leveling agents and silicone leveling agents. Among these, those having good compatibility with solvents are preferred. They may be added in an amount of generally 5-50,000 ppm, preferably 10-20,000 ppm.

Solvent-cast sheet:
The oriented film useful in the practice of the present invention is produced by first forming the thermoplastic saturated norbornene resin into a sheet by solvent casting and then stretching and orienting the sheet.

In order to solvent-cast the thermoplastic saturated norbornene resin, the resin is dissolved in a solvent. It is preferable that a solvent used should have a boiling point of at least 100°C, more preferably at least 120_{°}C. In particular, it is preferable to use a solvent which can evenly dissolve the thermoplastic saturated norbornene resin even in a solids concentration of at least 10 wt.% at 25 °C.

Examples of such a solvent may include toluene, xylene, ethylbenzene, chlorobenzene, trimethylbenzene, diethylbenzene, isopropylbenzene, chlorobenzene, etc. Of these, xylene, ethylbenzene and chlorobenzene are preferred.

These solvents may also contain cyclohexane, chloroform, benzene, cyclic ether such as tetrahydrofuran or dioxane, or a linear hydrocarbon such as n-hexane or n-octane so far as they dissolve the thermoplastic saturated norbornene resin.

Solvents which well satisfy these conditions include those containing at least 50% of an aromatic solvent such as xylene or ethylbenzene.

The concentration of the resin in the solution used in casting is generally 5-60 wt.%, preferably 10-50 wt.%, more preferably 20-45 wt.%. If the concentration is too low, its viscosity becomes low, and it is hence difficult to control the thickness of a sheet formed. If the concentration is too high, its viscosity is too high for easiness of operation upon the casting.

No particular limitation is imposed on the method of casting the resin solution. A common solvent-casting method used in optical materials such as a polycarbonate resin sheet can be used. As a specific example, may be mentioned a method in which a resin solution is cast on a flat sheet or plate, or roll composed of a heat-resistant material such as polyethylene terephthalate, steel belt, metal foil, or the like by means of a bar coater, T-die, T-die equipped with a bar, doctor knife, Meyer bar, roll coat, die coat or the like.

The sheet formed by the solvent casting is dried prior to stretching to reduce the concentration of a residual solvent to 2 wt.% or lower. In general, the sheet is preferably dried by two stages.

First of all, as the first-stage drying, the sheet on the flat plate or roll is dried in a temperature range not higher than 100_{°}C to give a residual solvent concentration of at most 10 wt.%, preferably at most 5 wt.%. In this case, if the drying temperature is too high, the sheet undergoes blowing upon the evaporation of the solvent.

The thus-dried sheet was then released from the flat plate or roll and heated from room temperature to at least 80 °C, preferably to a temperature range of from 110_{°}C to the glass transition temperature (Tg) of the resin to conduct the second-stage drying, thereby drying the sheet to give a residual solvent concentration of at most 2 wt.%, preferably at most 1 wt.%, more preferably 0.5 wt.%.

In this case, if the drying temperature is too low, the drying can not be caused to progress. If the drying temperature is too high, the resin is deteriorated by oxidation in the presence of oxygen. As the first stage, the sheet may be dried at room temperature, and after completion of the first-stage drying, the sheet may be released from the flat plate or roll and then subjected to the second-stage drying. Alternatively, after completion of the first-stage drying under heat, the sheet may be cooled once, and then released from the flat plate or roll and heated again to dry it.

The thickness of the sheet before stretching is generally 20 µm-1 mm, preferably 40-500 µm, more preferably 100-300 µm. The thickness of the sheet is too thin, its strength is lowered, leading to reduction in draw ratio. On the contrary, the sheet is too thick, its drying is difficult, and the thickness of the resulting film after stretching also becomes thick. There is thus a problem that its transparency is deteriorated, and the dependence of the liquid crystal display on visual angle becomes high.

The unevenness of thickness of the sheet before stretching falls within a range of ±10%, preferably ±5%, more preferably ±3% of the average thickness of the sheet as a whole. The unevenness of retardation value of the resulting stretched and oriented film becomes greater as the unevenness of thickness of the sheet is great.

The heat resistance of the stretched and oriented film depends on the kinds of the thermoplastic saturated norbornene resin and solvent used and the concentration of the residual solvent. The higher the concentration of the residual solvent, the lower the heat resistance. It is desired that the thermoplastic saturated norbornene resin forming the stretched and oriented film according to the present invention should have a glass transition temperature (Tg) of generally 90 _{°} C or higher, preferably 110°C or higher, more preferably 130°C or higher.

Stretched and oriented film:
The stretched and oriented film useful in the practice of the present invention is obtained by uniaxially stretching the dry raw sheet obtained in accordance with the solvent casting. Molecules of the film are oriented by the stretching. The thus-obtained stretched and oriented film has a certain retardation value.

The draw ratio is 1.1-8 times, preferably 2-6 times. If the draw ratio is too low, the retardation value does not increase. If the draw ratio is too high, the sheet to be stretched is broken.

The stretching is generally conducted in a temperature range of from Tg of the resin forming the sheet to (Tg + 50) _{°} C, preferably from (Tg + 5) to (Tg + 40) °C. If the stretching temperature is too low, the sheet is broken. If the temperature is too high, the resulting film does not undergo molecular orientation. It is hence impossible to obtain the desired phase plate.

The thus-obtained film in which molecules have been oriented by the stretching has a retardation value of a certain level. In order to use the stretched and oriented film in a phase plate, the film must have a retardation value of 30-1000 nm, preferably 50-800 nm as determined at a wavelength of 550 nm. As necessary for its purpose, the film is adjusted so as to have the desired retardation value within the above range. The retardation value can be controlled by the retardation value of the sheet before the stretching, the draw ratio, the stretching temperature and the thickness of the stretched and oriented film. If the sheet before the stretching has an even thickness, there is a tendency for the retardation value of the film to increase as its draw ratio is high. Therefore, it is possible to obtain a stretched and oriented film having the desired retardation value by changing the draw ratio.

The scattering of retardation value is preferably as small as possible. With respect to the stretched and oriented films according to the present invention, the scattering of retardation value at the wavelength of 550 nm is generally as small as ±30 nm or smaller, preferably ±20 nm or smaller, more preferably ±10 nm or smaller.

The in-plane scattering of retardation value and the unevenness of thickness of the film can be lessened by using a sheet of which the scattering and unevenness are small, and moreover by stretching the sheet under even stress. In order to conduct such stretching, it is desirable that the sheet should be stretched under even distribution of temperature, preferably in an environment in which the temperature has been controlled within a range of ±_{5 °} C.

Phase plate for liquid crystal displays:
The basic structures of the phase plates for liquid crystal displays according to the present invention include (1) a structure having a birefringent layer made of a single layer of the stretched and oriented film, and (2) a multilayer structure having a birefringent layer made of a plurality of birefringent films including two or more of the stretched and oriented films. In the case of the multilayer structure, the birefringent films may be stuck together with their optic axes of wave normal aligned with each other, and besides stuck together in such a manner that their optic axes form a certain angle. For example, when a plurality of stretched and oriented films whose retardation values vary are laminated with their optic axes aligned in the same direction, the additive properties of the retardation values are made good use to obtain a multi-layer film having various retardation values. The number of layers laminated is about 2-6. Examples of an adhesive used in the lamination include ultraviolet-curing adhesives, thermosetting adhesives, hot-melt adhesives, etc.

Other structures of the phase plates for liquid crystal displays according to the present invention include (3) a structure in which an optically isotropic protective layer (for example, an optically isotropic polycarbonate film or the like) is laminated on at least one side of the birefringent layer, (4) a sticker-type structure in which a release sheet is laminated on at least one side of the birefringent layer or the optically isotropic protective layer through a pressure-sensitive adhesive layer (for example, an acrylic pressure-sensitive adhesive layer) (which can be easily stuck on a liquid crystal cell or the like by peeling the release sheet), (5) a structure in which a phase plate is integrally laminated on a polarizing plate into a phase plate-cum- polarizing plate, and the like.

The stretched and oriented films showing birefringent behavior and composed of the thermoplastic saturated norbornene resin are not only resistant to temperature changes, but also excellent in moisture resistance and water resistance. In the conventional liquid crystal displays, a moisture-resistant and water-resistant protective layer has been often provided to protect an operating liquid crystal cell as needed. However, sufficient moisture resistance and water resistance can be achieved without providing at least one of such protective layers when the phase plate for liquid crystal displays according to the present invention is used, resulting in simplification of structure.

Examples:
The present invention will hereinafter be described by the following Referential Example, Example and Comparative Example. However, it should be borne in mind that this invention is not limited to and by these examples. Incidentally, all designations of "part" or "parts" and "%", which will appear in the following examples, mean part or parts by weight and wt.% unless expressly noted.

The following methods were followed for the measurement of the physical properties in the following examples.
(1) The number average molecular weight was measured by GPC making use of toluene as a solvent.
(2) The hydrogenation rate was determined by ¹H-NMR.
(3) The glass transition temperature (Tg) was measured by using, as a sample, a part of a sheet before stretching in accordance with DSC.
(4) The retardation value was determined by means of a Berek compensator at a wavelength of 550 nm.
(5) The concentration of a solvent remaining in a sheet was measured by a gas chromatography at a temperature of 200 _{°} C.
(6) The thickness of sheet and film was measured by means of a dial thickness gauge.
(7) The light transmittance was determined in the following manner. The wavelength of light to be caused to pass through a sheet before stretching or a stretched and oriented film was continuously changed within a range of 400-700 nm to measure a light transmittance at each wavelength by means of a spectrophotometer. The minimum transmittance in this measurement was regarded as a light transmittance for the sheet before stretching or the stretched and oriented film.

### Comparative Example 1:

A polycarbonate resin (Lexan 131-111, trade name, product of GE Co.) was dissolved in methylene chloride into a 31 wt.% solution. The solution was cast and dried in the same manner as in the following Example 1, thereby obtaining a sheet before stretching, which had a Tg of 140°C, an average thickness of 132 µm, an unevenness of thickness of ±4 µm and a retardation value of 2 nm.

The thus-obtained sheet before stretching was uniaxially stretched at a draw ratio of 1.8 times under control at 150 ± 1 _{°} C to obtain a stretched film. The film had an average thickness of 96 am, an unevenness of thickness of ±3 nm, an average retardation value of 558 nm and an in-plane scattering of retardation value of ±8 nm.

The stretched film was held at 80°C for 2 hours and then cooled to room temperature to determine a retardation value. It was found to be 556 nm on the average. The rate of change was 0.36% compared with the film before holding at 80 °C. Therefore, this stretched film had good retardation stability to temperature change and was suitable for use in a phase plate for liquid crystal displays.

### Referential Example 1:

To 6-methyl-1,4,5,8-dimethano-1,4,4a,5,6,7,8,8a-octahydronaphthalene (hereinafter abbreviated as "MTD"), were added, as a polymerization catalyst, 10 parts of a 15% solution of triethylaluminum in cyclohexane, 5 parts of triethylamine and 10 parts of a 20% solution of titanium tetrachloride in cyclohexane, thereby conducting ring-opening polymerization in cyclohexane. The thus-obtained ring-opened polymer was hydrogenated with a nickel catalyst to obtain a polymer solution. This polymer solution was solidified in isopropyl alcohol, and the resulting solids were dried to obtain a resin in the form of powder. The resin had a number average molecular weight of 40,000, a hydrogenation rate of at least 99.8%, a Tg of 142°C and a residual solvent concentration of 0.05%.

### Example 1:

In 85 g of chlorobenzene, were dissolved 15 g of the resin obtained in Referential Example 1 to obtain a resin solution composition. This resin solution was dropped on a surface-polished glass plate and cast in a width of about 300 mm and a length of 500 mm by a bar coater. The thus-cast solution was heated as the first-stage drying together with the glass plate from 25 °C to 90 °C over 30 minutes in an air-circulating oven to dry it. After cooling to room temperature, a part of the resulting sheet was cut off to determine a residual solvent concentration. As a result, it was found to be 1.2 wt.%. As the second-stage drying, the resin sheet was then peeled from the glass plate and dried for 90 minutes in an oven at 140°C. After cooled to room temperature, the peripheral edges of the sheet were trimmed by 10 mm in width to obtain a sheet before stretching. The sheet before stretching had a residual solvent concentration of 0.12 wt.%.

The surface of the sheet before stretching was observed visually and through an optical microscope. As a result, none of blowing, streaks, marks and the like were recognized. It had a Tg of 139°C, an average thickness of 130 am, an unevenness of thickness of ±4 µm or smaller at the most, a light transmittance of 90.2% and a retardation value of 3 nm or lower at the whole surface.

The sheet before stretching was uniaxially stretched at a draw ratio of 4.5 times under control at 150 ± 1 _{°} C to obtain a stretched and oriented film.

The stretched and oriented film had an average thickness of 62 µm, an unevenness of thickness of ±3 µm, an average retardation value of 560 nm and an in-plane scattering of retardation value of ±3 nm.

The stretched and oriented film was held at 80 °C for 2 hours and then cooled to room temperature to determine a retardation value. It was found to be 558 nm on the average. The rate of change was 0.36% compared with the film before holding at 80 °C. Therefore, this stretched and oriented film had the same retardation stability to temperature change as the film made of the polycarbonate, and was small in in-plane scattering of retardation value and hence suitable for use in a phase plate for liquid crystal displays.

### INDUSTRIAL APPLICABILITY

The phase plates for liquid crystal displays according to the present invention are optically even and excellent in heat resistance and moisture resistance, and hence are suitable for use in the field of liquid crystal displays.

## Claims

1. A phase plate for liquid crystal displays, comprising, as a birefringent layer, a film obtained by stretching and orienting a sheet of a thermoplastic saturated norbornene resin, which has been formed by solvent casting and has a residual solvent concentration of 2 wt.% or lower.

2. The phase plate for liquid crystal displays as claimed in Claim 1, wherein the thermoplastic saturated norbornene resin used in the formation of the sheet has a number average molecular weight within a range of 25,000-100,000 and a glass transition temperature of 90 _{°} C or higher.

3. The phase plate for liquid crystal displays as claimed in Claim 1 or 2, wherein a thickness of the thermoplastic saturated norbornene resin sheet formed by solvent casting falls within a range of from 20 /1.m to 1 mm.

4. The phase plate for liquid crystal displays as claimed in any one of Claims 1 to 3, wherein the stretched and oriented film is an oriented film obtained by uniaxially stretching the thermoplastic saturated norbornene resin sheet at a draw ratio within a range of 1.1-8 times.

5. The phase plate for liquid crystal displays as claimed in any one of Claims 1 to 4, wherein a retardation value of the stretched and oriented film at a wavelength of 550 nm falls within a range of 30-1000 nm.

6. The phase plate for liquid crystal displays as claimed in Claim 5, wherein an in-plane scattering of retardation value of the stretched and oriented film at a wavelength of 550 nm is ±30 nm or smaller.

7. The phase plate for liquid crystal displays as claimed in any one of Claims 1 to 6, wherein the birefringent layer has a multi-layer structure in which at least two stretched and oriented films have been laminated on each other.

8. The phase plate for liquid crystal displays as claimed in Claim 7, wherein the multi-layer structure is such that at least two stretched and oriented films are laminated with their optic axes aligned in the same direction.

9. The phase plate for liquid crystal displays as claimed in any one of Claims 1 to 8, wherein an optically isotropic protective layer is laminated on at least one side of the birefringent layer.

10. The phase plate for liquid crystal displays as claimed in any one of Claims 1 to 9, wherein a release sheet is laminated on at least one outermost side of the birefringent layer through a pressure-sensitive adhesive layer.

11. The phase plate for liquid crystal displays as claimed in any one of Claims 1 to 10, wherein a polarizing plate is integrally laminated thereon.
